# EUROPEAN PATENT APPLICATION

(11) **EP 3 540 920 A1**
(43) Date of publication of application: **18.09.2019**
(21) Application number: 17870606.5
(22) Date of filing: 27.10.2017
(51) Int. Cl.: H02K 7/06, F16H 13/08, F16H 25/20, F16H 25/22, F16H 35/10

(54) **LINEAR ELECTRIC ACTUATOR**

(30) Priority: 08.11.2016 JP 2016218183
(71) Applicant: NTN Corporation, Osaka-shi, Osaka 550-0003 (JP)
(72) Inventor: MATSUTO Takushi, Iwata-shi Shizuoka 438-8510 (JP); USHIDA Kimihito, Iwata-shi Shizuoka 438-8510 (JP); KAWAI Masahiro, Iwata-shi Shizuoka 438-8510 (JP); KATO Akio, Iwata-shi Shizuoka 438-8510 (JP)
(74) Representative: Grünecker Patent- und Rechtsanwälte PartG mbB
(86) International application number: PCT/JP2017/038863
(87) International publication number: WO 2018/088244

(57) **Abstract**

Provided is a linear electric actuator (1), including: an electric motor part (A); a screw mechanism part (B); and an operation part (C), the electric motor part (A) and the screw mechanism part (B) being coaxially arranged, a rotary motion of a hollow rotor inner (52c) of the electric motor part (A) being transmitted to a nut (92) of the screw mechanism part (B), wherein the operation part (C) is provided to a screw shaft (93) of the screw mechanism part (B), wherein the hollow rotor inner (52c) and the nut (92) are positioned so as to be prevented from overlapping each other in an axial direction, and wherein a rotation stopper mechanism (M) for the screw shaft (93) is provided on a radially inner side of the hollow rotor inner (52c).

## Description

### TECHNICAL FIELD

The present invention relates to a linear electric actuator.

### BACKGROUND ART

In recent years, in order to attain power saving and reduction in fuel consumption of a vehicle or the like, motorization has been promoted. For example, a system of performing operations of an automatic transmission, a brake, and a steering wheel of an automobile using power of an electric motor has been developed, and brought into market. As an actuator used for such applications, there has been known an actuator using a ball screw mechanism in order to convert a rotary motion of the electric motor into a motion in a linear direction (Patent Document 1).

### PRIOR ART DOCUMENTS

### PATENT DOCUMENTS

Patent Document 1: JP 2014-18007 A

### SUMMARY OF THE INVENTION

### PROBLEMS TO BE SOLVED BY THE INVENTION

In Patent Document 1, there is proposed a linear electric actuator in which a nut of the ball screw and a rotor of the electric motor are integrated so that the rotor of the electric motor has a function of the nut of the ball screw, and the rotor is supported by a rolling bearing. In this linear electric actuator, the electric motor and the ball screw are arranged coaxially with each other, and the rotor of the electric motor and the nut of the ball screw overlap each other in a radial direction. Moreover, a screw shaft and a dragging rod are integrally coupled to each other to form a rotation stopper mechanism between the dragging rod and a motor case end portion.

In the linear electric actuator of Patent Document 1, the rotor of the electric motor and the nut of the ball screw overlap each other in the radial direction. As a result of research on actual use, it was found that there is a limit in use when a mounting space in the radial direction is small.

Moreover, the rotation stopper mechanism is formed between the dragging rod, which extends to the outside of the motor case, and the motor case, and hence an axial dimension of the linear electric actuator becomes larger. Therefore, it was found that there is a problem on a mounting space depending on use.

In view of the problems described above, the present invention has an object to achieve downsizing and improvement in mountability of a linear electric actuator in which an electric motor part and a screw mechanism part are coaxially arranged.

### SOLUTION TO THE PROBLEMS

As a result of extensive studies conducted to achieve the object described above, the inventors of the present invention have arrived at a novel idea in such a manner that a rotor inner of an electric motor part and a nut of a screw mechanism part of a linear electric actuator are positioned so as to be prevented from overlapping with each other in an axial direction to downsize the linear electric actuator in a radial direction and a rotation stopper mechanism for a screw shaft of the screw mechanism part is provided through efficient use of an inner space of the rotor inner.

According to one embodiment of the present invention, as technical measures for achieving the above-mentioned object, there is provided a linear electric actuator, comprising: an electric motor part; a screw mechanism part; and an operation part, the electric motor part and the screw mechanism part being coaxially arranged, a rotary motion of a hollow rotor inner of the electric motor part being transmitted to a nut of the screw mechanism part, the operation part being provided to a screw shaft of the screw mechanism part, wherein the hollow rotor inner and the nut are positioned so as to be prevented from overlapping each other in an axial direction, and wherein a rotation stopper mechanism for the screw shaft is provided on a radially inner side of the hollow rotor inner.

With the configuration described above, downsizing, in particular, downsizing in the radial direction of the linear electric actuator in which the electric motor part and the screw mechanism part are coaxially arranged is achieved, thereby being capable of improving mountability.

When the rotation stopper mechanism for the screw shaft comprises a pin fitted to the screw shaft and a guide member having a guide groove, a structure of the rotation stopper mechanism can be simplified.

When the screw mechanism part is formed of a ball screw, a highly accurate and smooth linear motion can be achieved.

It is preferred that the linear electric actuator further comprise a speed reducer provided between the hollow rotor inner and the nut. With this, the electric motor can be downsized, thereby being capable of achieving reduction in size and weight of the linear electric actuator.

It is preferred that the above-mentioned speed reducer comprise a planetary speed reducer of a traction drive type. With this, reduction in noise without backlash can be achieved.

It is preferred that the linear electric actuator further comprise a hollow output shaft provided on a radially inner side of the hollow rotor inner; and a torque limiter provided between the hollow rotor inner and the hollow output shaft. With this, application of excessive load on components of the linear electric actuator is prevented, thereby being capable of preventing damage on the components.

### EFFECTS OF THE INVENTION

According to the present invention, downsizing, in particular, downsizing in the radial direction of the linear electric actuator in which the electric motor part and the screw mechanism part are coaxially arranged is achieved, thereby being capable of improving mountability.

### BRIEF DESCRIPTION OF DRAWINGS

FIG. 1 is a vertical sectional view for illustrating a linear electric actuator according to one embodiment of the present invention as viewed from a direction indicated by the arrows of the line H-H of FIG. 3 and FIG. 6.
FIG. 2 is a vertical sectional view for illustrating the linear electric actuator according to the one embodiment of the present invention as viewed from a direction indicated by the arrows of the line I-I of FIG. 6.
FIG. 3 is a left side view of FIG. 1.
FIG. 4 is a transverse sectional view as viewed from a direction indicated by the arrows of the line E-E of FIG. 1.
FIG. 5 is a transverse sectional view as viewed from a direction indicated by the arrows of the line F-F of FIG. 1.
FIG. 6 is a transverse sectional view as viewed from a direction indicated by the arrows of the line G-G of FIG. 2.
FIG. 7 is a perspective view as viewed from a left side of FIG. 2.
FIG. 8 is a perspective view as viewed from a right side of FIG. 2.

### EMBODIMENTS OF THE INVENTION

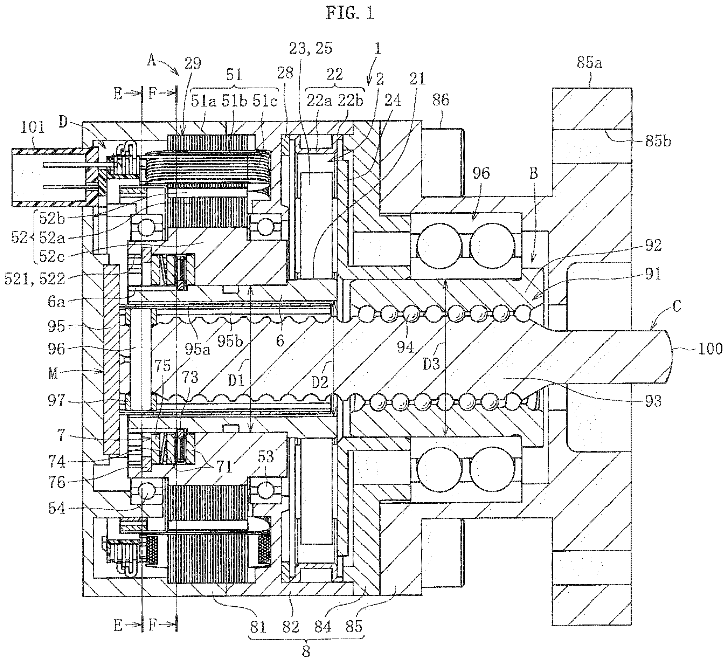

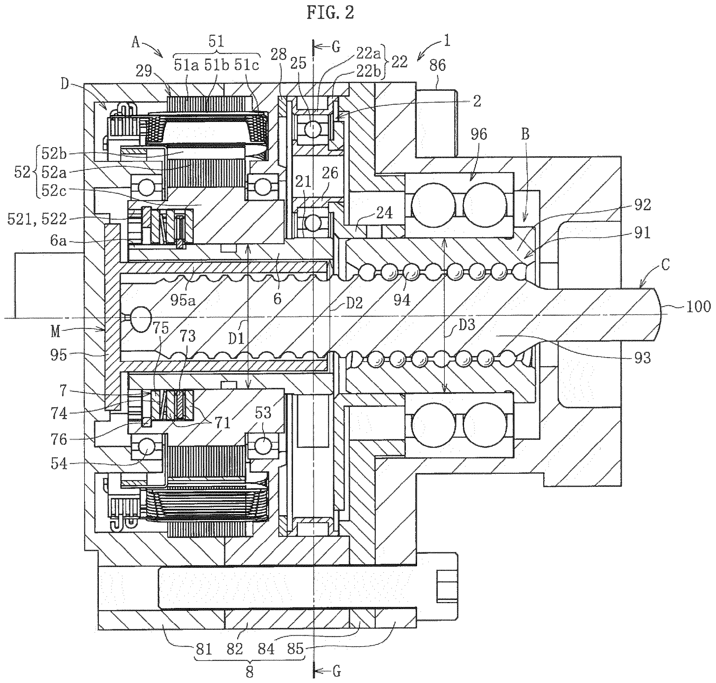

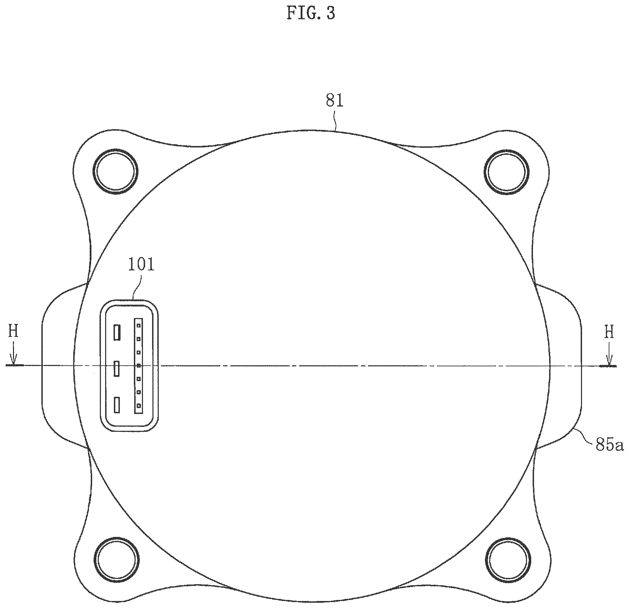

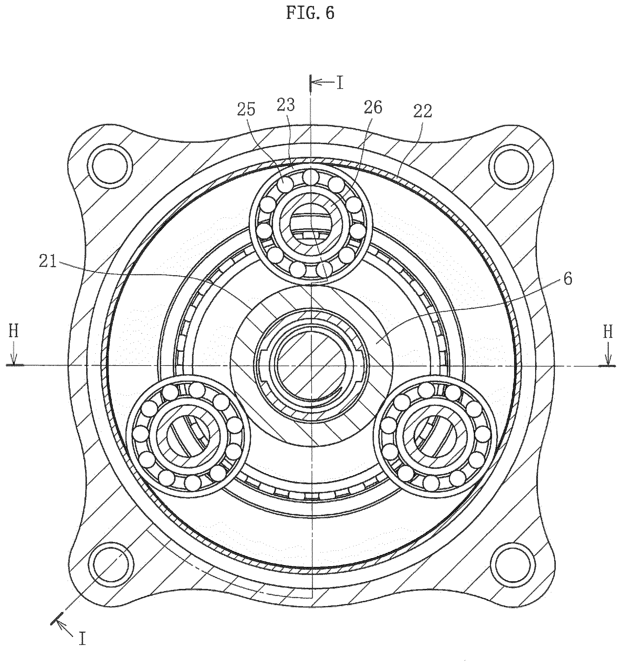

A linear electric actuator according to one embodiment of the present invention is described with reference to FIG. 1 to FIG. 8. FIG. 1 is a vertical sectional view for illustrating a linear electric actuator according to this embodiment as viewed from a direction indicated by the arrows of the line H-H of FIG. 3 and FIG. 6. FIG. 2 is a vertical sectional view as viewed from a direction indicated by the arrows of the line I-I of FIG. 6.

As illustrated in FIG. 1 and FIG. 2, the linear electric actuator 1 mainly comprises an electric motor part A configured to generate a driving force, a screw mechanism part B configured to convert a rotary motion of the electric motor part A into a linear motion and output the linear motion, and an operation part C configured to output the motion of the screw mechanism part B.

The electric motor part A is formed of a radial gap electric motor 29. The radial gap electric motor 29 comprises a stator 51 and a rotor 52. The stator 51 is fixed to a casing 8. The rotor 52 is arranged so as to be opposed to a radially inner side of the stator 51 with a gap.

The stator 51 comprises a stator core 51a, a bobbin 51b, and a coil 51c. The stator core 51a is formed of a plurality of electromagnetic steel plates stacked in the axial direction. The bobbin 51b is made of an insulating material and is mounted to the stator core 51a. The coil 51c is wound around the bobbin 51b.

The rotor 52 comprises a rotor core 52a, a plurality of magnets 52b, and a rotor inner (hereinafter also referred to as "hollow rotor inner") 52c. The rotor core 52a has an annular shape. The plurality of magnets 52b are mounted to an outer periphery of the rotor core 52a. The rotor inner 52c has an annular shape and is fixed to an inner periphery of the rotor core 52a. The rotor core 52a is formed of a plurality of electromagnetic steel plates stacked in the axial direction. An axial length of the rotor inner 52c is larger than an axial length of the rotor core 52a, and the rotor inner 52c is configured to project from both sides of the rotor core 52a in the axial direction.

For convenience of assembly, the casing 8 is divided at one position or a plurality of positions in the axial direction. In this embodiment, the casing 8 is divided into a bottom portion 81 having a bottomed cylindrical shape, a tubular portion 82 being opened at both ends, a pressurizing portion 84, and a cover portion 85. The pressurizing portion 84 and the cover portion 85 are arranged on one side of the tubular portion 82 in the axial direction (right side of FIG. 1 and FIG. 2), and the bottom portion 81 is arranged on another side of the tubular portion 82 in the axial direction (left side of FIG. 1 and FIG. 2). The bottom portion 81, the tubular portion 82, the pressurizing portion 84, and the cover portion 85 are fastened and integrated to one another through use of bolts 86. The cover portion 85 comprises, on one side in the axial direction, flange portions 85a for mounting to a device to be used (not shown), and the flange portions 85a have bolt insertion holes 85b.

As illustrated in FIG. 1 and FIG. 3, which is a left side view of FIG. 1, a terminal part D is provided in the bottom portion 81 of the casing 8, and a connector 101 of the terminal part D projects outward from the bottom portion 81. Terminals for motive power supply and signal lines in the connector 101 are connected to, for example, the coil 51c of the stator 51 and sensors.

Rolling bearings 53 and 54 are mounted to outer peripheral surfaces at both end portions of the rotor inner 52c in the axial direction, and the rotor inner 52c is supported by the rolling bearings 53 and 54 on the tubular portion 82 and the bottom portion 81 of the casing 8 so as to be freely rotatable. The rolling bearings 53 and 54 are deep-groove ball bearings, and are configured to support both a radial load and a thrust load.

The rotor inner 52c has a hollow shape, and an output shaft 6 having a hollow shape is provided along an inner peripheral surface of the rotor inner 52c. An outer peripheral surface of the hollow output shaft 6 is fitted to the inner peripheral surface of the hollow rotor inner 52c by clearance fitting, and the hollow output shaft 6 is rotatable relative to the hollow rotor inner 52c.

An annular recess portion 521 having an inner diameter dimension larger than that of other portions is formed in the inner peripheral surface of the rotor inner 52c on the another side in the axial direction (left side of FIG. 1 and FIG. 2), and a female spline (including serration) 522 extending in the axial direction is formed in an inner peripheral surface of the annular recess portion 521. Moreover, a male spline (including serration) 6a extending in the axial direction is formed in the outer peripheral surface of the hollow output shaft 6 on the another side in the axial direction (left side of FIG. 1 and FIG. 2). An annular space is defined between the inner peripheral surface of the annular recess portion 521 of the rotor inner 52c and the outer peripheral surface of the hollow output shaft 6 opposed thereto. In this embodiment, a torque limiter 7 is arranged in the annular space. The torque limiter 7 is configured to prevent application of excessive load on components of the linear electric actuator 1 to thereby prevent damage on the components, and details thereof are described later.

As illustrated in FIG. 1 and FIG. 2, the linear electric actuator 1 according to this embodiment comprises a speed reducer 2, which is provided between the hollow rotor inner 52c of the electric motor 29, specifically, the hollow output shaft 6 fitted to the hollow rotor inner 52c and a nut of the screw mechanism part B described later, and a rotary force with high torque having been reduced in speed is transmitted from the speed reducer 2 to the screw mechanism part B. With this, the electric motor 29 can be downsized, thereby achieving reduction in size and weight of the linear electric actuator 1. Moreover, in this embodiment, a planetary speed reducer of a traction drive type is used as the speed reducer 2. Thus, reduction in noise without backlash can be achieved. Details of the planetary speed reducer 2 of the traction drive type are described later.

The screw mechanism part B is formed of a ball screw 91. The ball screw 91 mainly comprises a nut 92, a screw shaft 93, a large number of balls 94, and rollers (not shown) being circulation members. The nut 92 has a spiral groove formed in an inner peripheral surface thereof, and the screw shaft 93 has a spiral groove formed in an outer peripheral surface thereof. The balls 94 are placed between the spiral grooves.

The nut 92 is supported on the cover portion 85 of the casing 8 so as to be freely rotatable by a double-row rolling bearing 96 mounted to an outer peripheral surface thereof. A carrier 24 serving as an output side of the speed reducer 2 is coupled to an outer peripheral surface of the nut 92 by press-fitting in a torque-transmittable manner.

A rotation stopper mechanism M for the screw shaft 93 is provided to the screw shaft 93 on the another side in the axial direction (left side of FIG. 1 and FIG. 2). With this, when the nut 92 rotates, the screw shaft 93 proceeds and retreats in the right-and-left direction of FIG. 1 and FIG. 2. An actuator head 100 serving as the operation part C is integrally provided to the screw shaft 93 on the one side in the axial direction (right side of FIG. 1 and FIG. 2). The actuator head 100 of the operation part C may be in various modes such as a mode in which the actuator head 100 is formed separately from the screw shaft 93 or a mode in which the actuator head 100 has a coupling structure with respect to corresponding parts of a device to be used. Details of the rotation stopper mechanism M are described later.

The overall configuration of the linear electric actuator 1 according to this embodiment is as described above. Next, a characteristic configuration and an advantageous configuration are described in detail. According to the characteristic configuration of this embodiment, in the linear electric actuator 1 in which the electric motor part A and the screw mechanism part B are coaxially arranged, the hollow rotor inner 52c and the nut 92 are positioned so as to be prevented from overlapping each other in the axial direction, and the rotation stopper mechanism M for the screw shaft 93 is provided on a radially inner side of the hollow rotor inner 52c. With this, downsizing, in particular, downsizing of the radial dimension of the linear electric actuator 1 is achieved, thereby being capable of improving mountability.

Specifically, as illustrated in FIG. 1 and FIG. 2, in the linear electric actuator 1 according to this embodiment, the hollow rotor inner 52c of the electric motor 29 and the hollow output shaft 6 coupled to the hollow rotor inner 52c through intermediation of the torque limiter 7 are positioned so as to be prevented from overlapping the nut 92 of the ball screw 91 in the axial direction.

In the linear electric actuator 1 according to this embodiment, the electric motor part A and the screw mechanism part B are coaxially arranged, but the nut 92 of the ball screw 91 is prevented from overlapping the hollow rotor inner 52c and the hollow output shaft 6 in the radial direction. Therefore, an inner diameter D1 of the hollow rotor inner 52c and an inner diameter D2 of the hollow output shaft 6 can be set smaller than an outer diameter D3 of the nut 92 of the ball screw 91. With this, the small-sized electric motor 29 can be used, thereby being capable of achieving downsizing, in particular, downsizing of the radial dimension of the linear electric actuator 1.

In addition to the feature described above, through efficient use of the inner space defined along the inner peripheral surface of the hollow output shaft 6, the screw shaft 93 of the ball screw 91 is accommodated so that an overall axial dimension is also downsized. Further, through efficient use of the inner space described above, the rotation stopper mechanism M is provided to the screw shaft 93 on the another side in the axial direction (left side of FIG. 1 and FIG. 2).

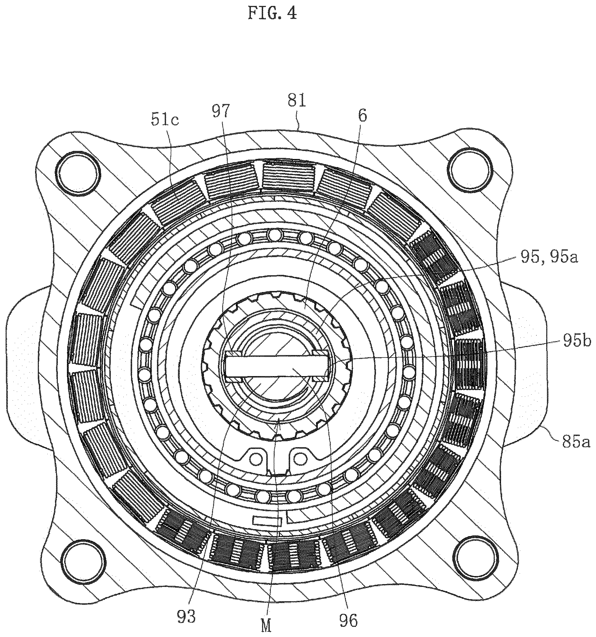

As illustrated in FIG. 1 and FIG. 4 which is a transverse sectional view as viewed from a direction indicated by the arrows of the line E-E of FIG. 1, the rotation stopper mechanism M for the screw shaft 93 comprises a guide member 95, a pin 96 fitted to a hole passing through the screw shaft 93 in the radial direction, and a guide collar 97 externally fitted to the pin 96 so as to be freely rotatable. The guide member 95 is fixed to the bottom portion 81 of the casing 8, and a cylindrical portion 95a of the guide member 95 is arranged between the inner peripheral surface of the hollow output shaft 6 and the outer peripheral surface of the screw shaft 93. A guide groove 95b is formed on an inner side of the cylindrical portion 95a, and the guide collar 97 is fitted to the guide groove 95b. The guide collar 97 is made of a resin material such as PPS, and enables smooth rotation. With this, when the nut 92 rotates, the screw shaft 93 smoothly proceeds and retreats in the right-and-left direction of FIG. 1 and FIG. 2.

In this embodiment, illustration is given of the case in which the outer peripheral surface of the guide collar 97 has a cylindrical shape, and guide surfaces of the guide groove 95b on which the guide collar 97 is guided are formed of two parallel surfaces. However, the present invention is not limited to this configuration. There may be provided guide surfaces formed of two surfaces having an angle in a V-shape or a guide surface having a cylindrical shape, and the outer peripheral surface of the guide collar 97 may be formed into a shape corresponding to the guide surface.

Moreover, illustration is given of the case in which the guide collar 97 is made of a resin material. However, the present invention is not limited to this. The guide collar 97 may be made of metal. Further, the guide collar 97 may be omitted, and the pin 96 may be directly engaged with the guide groove 95b.

As described above, in the linear electric actuator 1 in which the electric motor part A and the screw mechanism part B are coaxially arranged, with the configuration in which the hollow rotor inner 52c and the nut 92 are positioned so as to be prevented from overlapping each other in the axial direction and in which the rotation stopper mechanism M for the screw shaft 93 is provided on the radially inner side of the hollow rotor inner 52c, downsizing, in particular, downsizing of the radial dimension of the linear electric actuator 1 is achieved, thereby being capable of improving mountability.

With regard to the configuration described in Claims in which the rotation stopper mechanism for the screw shaft is provided on the radially inner side of the hollow rotor inner, in a case of this embodiment in which the hollow output shaft is coupled to the hollow rotor inner through intermediation of the torque limiter, the configuration corresponds to the structure in which the rotation stopper mechanism for the screw shaft is provided on the radially inner side of the hollow output shaft to be fitted to the inner side of the hollow rotor inner. The configuration described in Claims encompasses such case.

Next, description is made of details of the torque limiter being the advantageous configuration with reference to FIG. 1, FIG. 2, and FIG. 5 which is a transverse sectional view as viewed from a direction indicated by the arrows of the line F-F of FIG. 1. The torque limiter 7 is configured to transmit a rotary motive force output from the electric motor 29 to the hollow output shaft 6, and block transmission of torque when an excessive load acts thereon, thereby allowing relative rotation between the electric motor 29 and the hollow output shaft 6. As long as this function is provided, any torque limiter 7 having a freely selected configuration may be used. In this embodiment, illustration is given of the case in which a friction clutch 7 is used as one example of the torque limiter 7.

The friction clutch 7 comprises a pair of first friction plates 71, a second friction plate 73 incorporated between the pair of first friction plates 71, a pressing plate 75, and an elastic member 74. The elastic member 74 such as a corrugated spring is interposed between the pressing plate 75 and the first friction plates 71 to bring the first friction plates 71 and the second friction plate 73 into press contact. The pressing plate 75 is positioned in the axial direction by a stopper ring 76 locked to an annular groove of the inner peripheral surface of the rotor inner 52c.

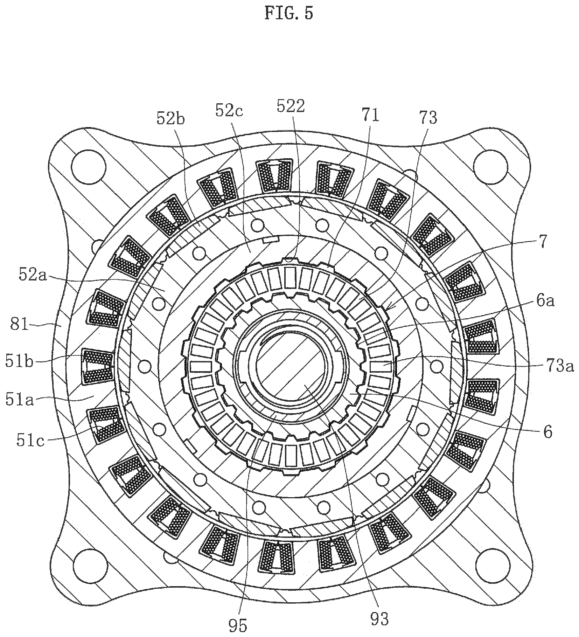

As illustrated in FIG. 5, the first friction plates 71 are fitted to the female spline 522 of the rotor inner 52c by spline fitting and coupled thereto in a torque-transmittable manner. Although not shown in FIG. 5, the pressing plate 75 is also fitted to the female spline 522 of the rotor inner 52c by spline fitting. The second friction plate 73 is fitted to the male spline 6a of the hollow output shaft 6 by spline fitting and coupled thereto in a torque-transmittable manner. The first friction plates 71 and the second friction plate 73 are movable relative to the female spline 522 and the male spline 6a in the axial direction, and an urging force of the elastic member 74 generates a friction force between the first friction plates 71 and the second friction plate 73. Further, a large number of friction members 73a are mounted to the second friction plate 73 so as to be arrayed in a circumferential direction, thereby being capable of obtaining a stable friction force with respect to the first friction plates 71.

When the torque generated between the hollow rotor inner 52c and the hollow output shaft 6 of the electric motor 29 is equal to or smaller than the friction force generated between the friction plates 71 and 73, the friction plates 71 and 73 integrally rotate to transmit the torque to the hollow output shaft 6. When the torque generated between the hollow rotor inner 52c and the hollow output shaft 6 is larger than the friction force generated between the friction plates 71 and 73, one friction plate slips with respect to another friction plate, with the result that torque transmission to the hollow output shaft 6 is blocked. With this, application of an excessive load to the components of the linear electric actuator 1 is prevented, thereby being capable of preventing damage on the components.

Further, description is made of details of the planetary speed reducer of a traction drive type as an advantageous configuration with reference to FIG. 2 and FIG. 6 which is a transverse sectional view as viewed from a direction indicated by the arrows of the line G-G of FIG. 2. The planetary speed reducer 2 of the traction drive type mainly comprises a sun roller 21, an outer ring 22, a plurality of planetary rollers 23, and the carrier 24 (see FIG. 2). An end portion of the hollow output shaft 6 is used as the sun roller 21, and rolling bearings 25 (for example, deep-groove ball bearings) are used as the planetary rollers 23. An inner ring of each of the rolling bearings 25 being the planetary rollers 23 is press-fitted and fixed to a shaft 26 of the carrier 24.

As illustrated in FIG. 1 and FIG. 2, the outer ring 22 comprises a main body portion 22a and a flange portion 22b. The main body portion 22a has a U-shaped section. The flange portion 22b projects from both sides of the main body portion 22a in the axial direction. Although not shown in the drawings, in a state before coupling the tubular portion 82 and the pressurizing portion 84 of the casing 8, the outer ring 22 accommodated along the inner periphery of the tubular portion 82 allows the flange portion 22b on the one side in the axial direction (right side of FIG. 1 and FIG. 2) to project with respect to an end surface of the tubular portion 82. After that, when the pressurizing portion 84, together with the cover portion 85, is pressed so as to be brought into abutment against the end surface of the tubular portion 82 and both the components are connected to each other through use of the bolts 86, the outer ring 22 having been pressed by the pressurizing portion 84 is elastically deformed so that the main body portion 22a expands toward the radially inner side. Through the elastic deformation of the outer ring 22 toward the radially inner side, a preload is applied to a contact portion between the outer ring 22 and the planetary rollers 23 as well as to a contact portion between the planetary rollers 23 and the sun roller 21.

Between end surfaces of the flange portion 22b of the outer ring 22 and the tubular portion 82, there is arranged an adjustment member (shim) 28 having a ring shape. When the adjustment member 28 having an appropriate thickness is selected and used, the preload can be set within a predetermined range.

The outer peripheral surface of the nut 92 of the ball screw 91 is coupled to the inner peripheral surface of the carrier 24 being the output side of the speed reducer 2 by press-fitting in a torque-transmittable manner.

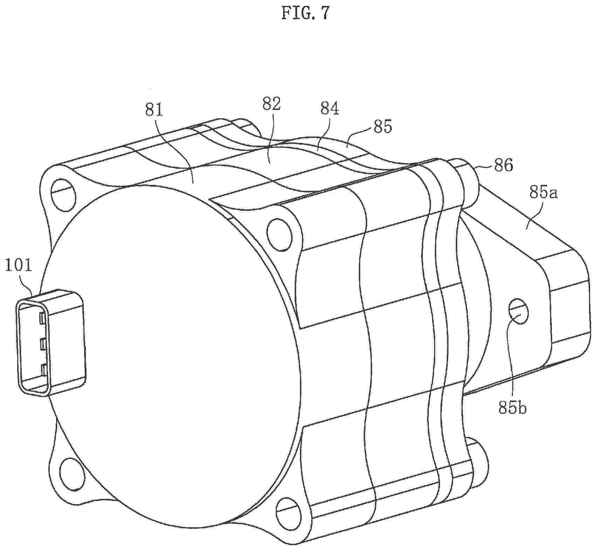

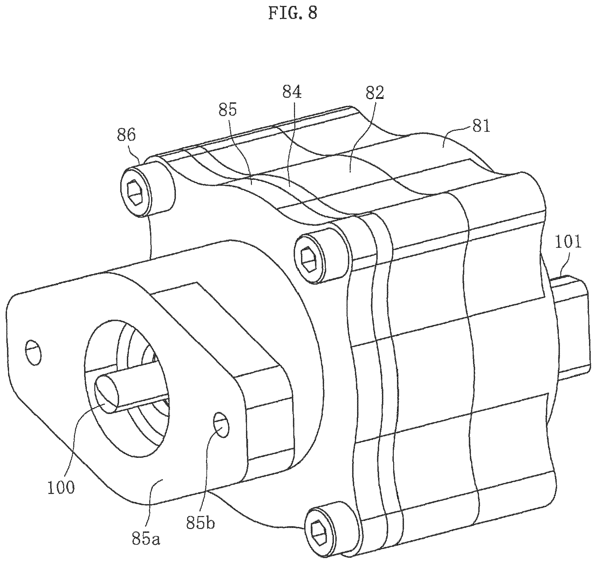

Finally, in FIG. 7 and FIG. 8, illustration is given of an outer appearance of the linear electric actuator 1 according to this embodiment. FIG. 7 is a perspective view as viewed from the left side of FIG. 2, and FIG. 8 is a perspective view as viewed from the right side of FIG. 2. It can be understood that the linear electric actuator 1 according to this embodiment is efficiently downsized, in particular, in radial dimension and is excellent in mountability.

In the linear electric actuator according to the embodiment described above, illustration is given of the configuration in which the screw mechanism part is formed of the ball screw. However, the present invention is not limited to this configuration. The screw mechanism part may be formed of a slide screw. Moreover, illustration is given of a radial gap electric motor as the electric motor 29 of the electric motor part A. However, the present invention is not limited to this, and there may be used an axial gap motor.

In the linear electric actuator according to the embodiment described above, illustration is given of the use of the planetary speed reducer of a traction drive type as the speed reducer. However, the present invention is not limited to this. A speed reducer having another mechanism may be used. Moreover, the speed reducer may be omitted from the linear electric actuator.

The present invention is not limited to the above-mentioned embodiment. As a matter of course, the present invention may be carried out in various modes without departing from the spirit of the present invention. The scope of the present invention is defined in claims, and encompasses equivalents described in claims and all changes within the scope of claims.

### DESCRIPTION OF REFERENCE SIGNS

- 1: linear electric actuator
- 2: planetary speed reducer of traction drive type
- 6: hollow output shaft
- 7: torque limiter
- 8: casing
- 23: planetary roller
- 29: electric motor
- 52c: rotor inner
- 91: ball screw
- 92: nut
- 93: screw shaft
- 95: guide member
- 96: pin
- 97: guide collar
- A: electric motor part
- B: screw mechanism part
- C: operation part
- D: terminal part
- M: rotation stopper mechanism

## Claims

1. A linear electric actuator, comprising: an electric motor part; a screw mechanism part; and an operation part,
the electric motor part and the screw mechanism part being coaxially arranged, a rotary motion of a hollow rotor inner of the electric motor part being transmitted to a nut of the screw mechanism part, the operation part being provided to a screw shaft of the screw mechanism part,
wherein the hollow rotor inner and the nut are positioned so as to be prevented from overlapping with each other in an axial direction, and
wherein a rotation stopper mechanism for the screw shaft is provided on a radially inner side of the hollow rotor inner.

2. The linear electric actuator according to claim 1, wherein the rotation stopper mechanism for the screw shaft comprises a pin fitted to the screw shaft and a guide member having a guide groove.

3. The linear electric actuator according to claim 1, wherein the screw mechanism part is formed of a ball screw.

4. The linear electric actuator according to any one of claims 1 to 3, further comprising a speed reducer provided between the hollow rotor inner and the nut.

5. The linear electric actuator according to claim 4, wherein the speed reducer comprises a planetary speed reducer of a traction drive type.

6. The linear electric actuator according to any one of claims 1 to 5, further comprising:
a hollow output shaft provided on a radially inner side of the hollow rotor inner; and
a torque limiter provided between the hollow rotor inner and the hollow output shaft.
